## Europäisches Patentamt
## European Patent Office
## Office européen des brevets

(11) Numéro de publication: **0 034 956**
**B1**

(12) **FASCICULE DE BREVET EUROPÉEN**

(45) Date de publication du fascicule du brevet:
14.03.84

(51) Int. Cl.³: **H 04 N 5/06**

(21) Numéro de dépôt: **81400097.2**

(22) Date de dépôt: **23.01.81**

(54) Générateur de signaux de base et de signaux de test de télévision, et système de télévision comportant un tel générateur.

(30) Priorité: **26.02.80 FR 8004207**

(43) Date de publication de la demande:
**02.09.81 Bulletin 81/35**

(45) Mention de la délivrance du brevet:
**14.03.84 Bulletin 84/11**

(84) Etats contractants désignés:
**AT BE CH DE GB IT LI LU NL SE**

(56) Documents cités:
**DE - A - 2 746 642**

**RADIOMENTOR ELECTRONIC, vol. 45, no. 1, janvier 1979 Munich, DE R.BRAUER:"Fremdsynchronisierbarer Fernsehtaktgeber mit Impulsgeber IC S 178", pages 17 et 18**

(73) Titulaire: **THOMSON-CSF, 173, Boulevard Haussmann, F-75379 Paris Cedex 08 (FR)**

(72) Inventeur: **Pham van Cang, Luc, Thomson-CSF SCPI 173, bld Haussmann, F-75360 Paris Cedex 08 (FR)**

(74) Mandataire: **Turlèque, Clotilde et al, THOMSON-CSF SCPI 173, Bld Haussmann, F-75379 Paris Cedex 08 (FR)**

### Générateur de signaux de base et de signaux de test de télévision et système de télévision comportant un tel générateur

La présente invention concerne les générateurs de signaux de base et de signaux de test de télévision et les systèmes de télévision comportant de tels générateurs.

Dans les équipements de télévision actuels, il est utile de créer d'une part, des signaux servant à la génération du signal de télévision, appelés signaux de base de télévision, et d'autre part, des signaux servant à contrôler la qualité du signal de télévision, appelés signaux de test de télévision.

Pour cela, il est connu de centraliser un générateur de tels signaux et d'effectuer une distribution par câbles à tous les équipements dont le fonctionnement nécessite l'emploi de ces signaux.

Mais le coût du câblage des équipements au générateur centralisé est généralement très cher. De plus, il n'est pas pratique d'utiliser des câbles.

Une autre méthode, généralement moins onéreuse, consiste à générer ces signaux dans chacun des équipements de télévision.

Cependant, cette méthode, souvent préférée à la distribution par câbles multiples, manque de souplesse. En effet, elle nécessite autant de circuits de génération que de type de signaux à générer. Dans le cas où les équipements sont l'objet d'une specification spéciale entraînant l'emploi de signaux autres que ceux prévus, des problèmes peuvent exister pour l'incorporation de nouveaux circuits dans les équipements classiques.

La demande de brevet allemand 2 746 642 décrit un dispositif pouvant être facilement adapté à différents standards. Il comporte une première et une seconde mémoire morte fournissant respectivement les valeurs numériques de signaux ayant pour fréquence la fréquence de ligne et de signaux ayant pour fréquence la fréquence de trame. Ces mémoires reçoivent respectivement des valeurs d'adresses fournies par deux compteurs, qui sont commandés respectivement par un signal impulsionnel ayant une fréquence multiple de la fréquence de ligne et par un signal impulsionnel ayant une fréquence égale à la fréquence de ligne. Ce dispositif ne permet pas de générer des signaux ayant pour fréquence la fréquence de trame et variant à un rythme supérieur à la fréquence de ligne, ce qui restreint la gamme des signaux qu'il est possible de générer.

Le générateur selon l'invention permet de générer ce type de signaux tout en étant simple à réaliser et facile à adapter pour changer de standard.

Selon l'invention, un générateur de signaux de base et de signaux de test de télévision, comportant une première mémoire mémorisant les valeurs que prennent les signaux de base et les signaux de test pendant des intervalles de temps de durée $T_0$, et comportant des moyens d'adressage pour fournir à la première mémoire des valeurs d'adresses à une fréquence $\frac{1}{T_0}$, est caractérisé en ce que la première mémoire est constituée de p zones de mémoire ayant chacune q cases de mémoires (p et q entiers positifs), chaque case mémorisant un ensemble de bits définissant totalement, pour un quantum de temps $T_0$, l'amplitude des signaux de base et de signaux de test; et en ce que les moyens d'adressage comportent: une deuxième mémoire ayant t cases de mémoire (t entier positif), chaque case mémorisant un nombre binaire associé à une zone de mémoire de la première mémoire; un premier compteur permettant de lire successivement les t cases de mémoires de la deuxième mémoire; et un deuxième compteur permettant de lire, suivant la fréquence $\frac{1}{T_0}$, les cases de mémoire de la zone de mémoire associée au nombre binaire délivré par la deuxième mémoire.

Selon l'invention, il est également prévu un système de télévision comportant un tel générateur.

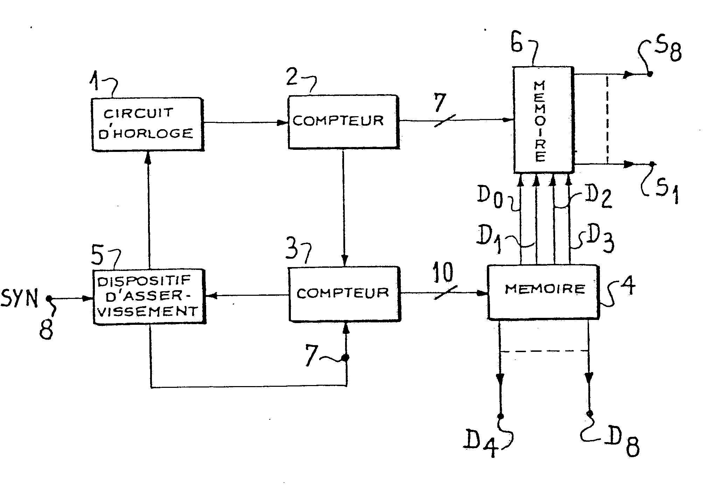

L'invention sera mieux comprise et d'autres caractéristiques apparaîtront à l'aide de la description et de la figure unique s'y rapportant, sur laquelle est représenté un mode de réalisation du générateur selon l'invention.

Sur cette figure, une liaison simple est représentée par un trait fin et une liaison multiple par un trait fin coupant un petit segment de droite à côté duquel un chiffre indique le nombre de liaisons simples formant cette liaison multiple.

En outre, sur cette figure est représenté un circuit d'horloge 1 relié à l'entrée d'un compteur 2. Ce compteur 2 comporte sept sorties (appelées sorties $s_1$ à $s_7$ dans la suite de texte) respectivement reliées à sept entrées d'adresse d'une première mémoire morte 6 et une sortie auxiliaire (appelée $s_a$ dans la suite du texte) reliée à l'entrée d'un compteur 3. Ce compteur 3 comporte dix sorties (appelées sorties $P_1$ à $P_{10}$ dans la suite du texte) respectivement reliées à dix entrées d'adresse d'une deuxième mémoire morte 4 et une sortie auxiliaire (appelée $p_a$ dans la suite du texte) reliée à une première entrée d'un dispositif d'asservissement 5 dont une première sortie est connectée à une entrée de commande du circuit d'horloge 1. La deuxième mémoire 4 comporte quatre sorties $D_0$ à $D_3$ respectivement reliées à quatre entrées d'adresse auxiliaires de la mémoire morte 6 et quatre sorties auxiliaires reliées respectivement à quatre bornes de sortie $D_4$ à $D_8$. La mémoire 6 présente en outre huit sorties respectivement reliées à huit bornes de sorties $S_1$ à $S_8$. Une entrée de remise à zéro 7 du compteur 3 est reliée à une deuxième sortie du dispositif d'asservissement 5 dont une deuxième entrée 8 est destinée à recevoir un signal de synchronisation extérieure SYN.

Le générateur qui vient d'être décrit comporte un ensemble d'éléments (1, 2, 3, 4 et 6) pour générer les signaux de base et les signaux de test désirés sur les bornes de sortie $S_1$ à $S_8$, et un dispositif d'asservissement 5 indispensable pour la synchronisation d'un ensemble de plusieurs générateurs de ce type.

Les signaux délivrés par le générateur décrit s'appliquent à un système de télévision classique 625 lignes.

Il est à remarquer que les signaux de base et les signaux de test d'un système de télévision sont des signaux normalisés, strictement caractérisés en amplitude et en durée. Cette normalisation impose à ces signaux d'être définis par des quanta d'amplitude et de temps en nombre limité. En effet, il suffit de dix niveaux d'amplitude et d'un quantum de temps $T_0$ égal à 0,8 µs pour caractériser un système complet de signaux de base et de signaux de test de télévision.

Le fonctionnement du générateur représenté sur la figure est le suivant:

Le circuit d'horloge 1 est un pilote à quartz du type VCXO dont la fréquence d'utilisation est supérieure à $\dfrac{1}{T_0}$.

Le dispositif d'asservissement 5 réalise un asservissement du circuit d'horloge 1 et du compteur 3 afin d'assurer un synchronisme entre le signal d'horloge fourni par le circuit d'horloge 1, les instants de remise à zéro du compteur 3 et le signal de synchronisation extérieure SYN.

Les mémoires mortes 4 et 6 sont des mémoires de type 2716, constituées de 2048 cases de mémoire pouvant mémoriser huit bits chacune. Ces mémoires disposent, outre les connexions fonctionnelles (non représentées) qui leur sont propres, de huit sorties et de onze entrées d'adresse, et sont caractérisées par le fait qu'elles génèrent des signaux de sortie qui sont fonction des signaux présents sur leurs entrées d'adresse.

Parmi les 2048 cases de mémoire de la mémoire 6, 1280 cases sont utilisées pour mémoriser 1280 mots de huit bits. Ces 1280 cases sont groupées en seize zones de mémoire distinctes repérées par un indice j (j variant de 0 à 15). Chaque zone de mémoire comporte 80 cases de mémoire repérées par un indice i (i variant de 0 à 79). Ainsi les 1280 cases utiles sont repérées par les valeurs du couple d'indices (i, j).

Chaque mot de huit bits mis en mémoire définit totalement, pour un quantum de temps $T_0$, l'amplitude de signaux de base et de signaux de test pouvant être générés. Par exemple, pour définir: quatre signaux $X_1$ à $X_4$ dont l'amplitude peut prendre deux valeurs, et un signal $X_5$ dont l'amplitude peut prendre seize valeurs, il suffit d'associer un premier bit à la valeur de l'amplitude du signal $X_1$, un deuxième bit à celle du signal $X_2$, un troisième bit à celle du signal $X_3$, un quatrième bit à celle du signal $X_4$, et un quatrième bit à celle du signal $X_4$, et

d'associer les quatre bits restants à la valeur d'amplitude du signal $X_5$.

Lorsque les 80 cases de mémoire d'une même zone de mémoire sont lues successivement suivant la fréquence $\dfrac{1}{T_0}$, les huit sorties de la mémoire 6 délivrent huit signaux binaires d'une durée totale égale à 80 $T_0$. Ces huit signaux binaires définissent totalement, pour une durée de 80 $T_0$, l'amplitude des signaux de base et des signaux de test désirés. Les seize zones de mémoire permettent de mémoriser seize configurations différentes de signaux binaires d'une durée de 80 $T_0$, ce qui correspond à définir seize configurations de signaux de base et de signaux de test. La mémoire 6 est donc programmée afin que les seize configurations mémorisées correspondent à celles désirées, par exemple:

— Configuration correspondant à la partie image de télévision (trame active).
— Configuration correspondant à la suppression verticale.
— Configuration correspondant à la synchronisation verticale.
— Configuration correspondant à l'égalisation (préégalisation et postégalisation).
— Configuration correspondant à l'insertion de signal test, etc.

Parmi les 2048 cases de mémoire de la mémoire 4, 625 cases sont utilisées pour mémoriser 625 mots de huit bits. Ces cases sont repérées par l'indice t (t variant de 0 à 624).

Le compteur 2 est constitué par une chaîne de sept diviseurs binaires (non représentés). La fréquence du signal issu du dernier diviseur de la chaîne est égale à la fréquence ligne de télévision $F_L$. Les sept sorties des sept diviseurs constituent les sept sorties $s_1$, à $s_7$ du compteur 2. Ce compteur 2 compte de 0 à 79 puis est remis à zéro. La durée du comptage est celle d'une ligne de télévision, cette durée est constituée de 80 quanta de temps $T_0$.

Les signaux présents sur les sorties $s_1$ à $s_7$ du compteur 2 permettent de lire successivement, dans la mémoire 6, les mots de huit bits contenus dans les cases repérées par les couples (0, j) à (79, j). La fréquence de lecture est $\dfrac{1}{T_0}$.

Le compteur 3 est couplé au compteur 2 pour recevoir un signal d'horloge à la fréquence $2F_L$. Ce compteur 3 est constitué par une chaîne de 10 diviseurs binaires (non représentés). La fréquence du signal issu du dernier diviseur est égale à la fréquence trame de télévision $F_V$ ($F_V = 2F_L/625$). Les dix sorties des dix diviseurs constituent les dix sorties $P_1$ à $P_{10}$ du compteur 3. Ce compteur 3 compte de 0 à 624 puis est remis à zéro. La durée du comptage est celle d'une trame de télévision, cette durée est constituée de 625 quanta de temps $40T_0$ ($40T_0$ correspondant à la durée d'une demi ligne de télévision).

Les signaux présents sur les sorties $P_1$ à $P_{10}$ du compteur 3 permettent de lire successivement,

dans la mémoire 4, les mots de huit bits contenus dans les cases repérées de 0 à 624. La fréquence de lecture est $1/40T_0$.

L'état des quatre bits délivrés sur les sorties $D_0$ à $D_3$ de la mémoire 4 indiquent la valeur de l'indice j de la case à lire dans la mémoire 6. Les sorties restantes $D_4$ à $D_8$ de la mémoire 4 fournissent des informations supplémentaires de trame. Ainsi, la mémoire 6 délivre, pour chaque quantum de temps $T_0$, les huit bits mémorisés dans la case mémoire dont le couple d'indice de repérage est donné par les signaux présents sur les sorties $s_1$ à $s_7$ du compteur 2 (pour l'indice i) et par les signaux présents sur les sorties $D_0$ à $D_3$ de la mémoire 4 (pour l'indice j).

Pour obtenir, sur les huit bornes de sortie $S_1$ à $S_8$ de la mémoire 6, la configuration de signaux de base et de signaux de test désirés, il suffit de programmer la mémoire 4 pour qu'elle délivre la valeur de l'indice j associée à la configuration voulue.

Le rôle de la mémoire 4 est celui d'une mémoire d'adresse.

En effet, d'une part les dix signaux présents sur les sorties $P_1$ à $P_{10}$ du compteur 3 ne peuvent adresser directement la mémoire 6 (cela nécessiterait une capacité de mémoire trop importante), et d'autre part 16 configurations d'un ensemble de huit signaux binaires suffisent, dans notre exemple, à définir l'amplitude des signaux de base et des signaux de test désirés.

L'utilisateur du générateur programme la mémoire 4 de façon à obtenir, pendant la durée d'une trame, les configurations qu'il désire.

Il est à remarquer que pour générer un signal à N (N entier positif) niveaux d'amplitude, il suffit de programmer la mémoire 6 afin que M (M compris entre 1 et 8) de huit signaux de sortie de cette mémoire 6 caractérisent ce signal.

Par exemple, l'amplitude d'un signal à seize niveaux d'amplitude sera entièrement défini par quatre signaux binaires.

Les sorties $D_4$ à $D_8$ de la mémoire 4 non utilisées pour repérer les cases de mémoire 6 servent à fournir directement des signaux à récurrence trame.

Cette description de fonctionnement montre que le dispositif peut s'adapter à des exigences particulières très diverses sans modification de sa structure. En effet, l'utilisateur programme (ou reprogramme) les mémoires 4 et 6 suivant ses besoins.

L'invention n'est pas limitée au mode de réalisation décrit et représenté.

En particulier, le générateur n'est pas limité à huit signaux de sortie. En utilisant deux mémoires 2716, seize niveaux de sortie sont simultanément disponibles, ce qui permet une acquisition plus fine des signaux de base et des signaux test désirés. De même, il est aussi possible d'utiliser une quantification du temps plus fine que celle considérée.

Il est à la portée de l'homme de l'art d'utiliser, pour les mémoires 4 et 6, soit des mémoires vives »RAM« (random accessmemory), soit des mémoires mortes »ROM« (read only memory) ou »PROM« (programmable read only memory), soit un système logique combinatoire cablé ou programmé »FPLA« (field programmable logique array), soit tout autre dispositif similaire. Il est à noter que le nombre de signaux générés et la complexité de ces signaux dépendent de la capacité de mémoire utilisée.

**Revendications**

1. Générateur de signaux de base et de signaux de test de télévision, comportant une première mémoire (6) mémorisant les valeurs que prennent les signaux de base et les signaux de test pendant des intervalles de temps de durée $T_0$, et comportant des moyens d'adressage pour fournir à la première mémoire (6) des valeurs d'adresses à une fréquence $\frac{1}{T_0}$, caractérisé en ce que la première mémoire (6) est constituée de p zones de mémoire ayant chacune q cases de mémoires (p et q entiers positifs), chaque case mémorisant un ensemble de bits définissant totalement, pour un quantum de temps $T_0$, l'amplitude des signaux de base et de signaux de test; et en ce que les moyens d'adressage comportent: une deuxième mémoire (4) ayant t cases de mémoire (t entier positif), chaque case mémorisant un nombre binaire associé à une zone de mémoire de la première mémoire (6); un premier compteur (3) permettant de lire successivement les t cases de mémoire de la deuxième mémoire (4) et un deuxième compteur (2) permettant de lire, suivant la fréquence $\frac{1}{T_0}$, les cases de mémoire de la zone de mémoire associé au nombre binaire délivré par la deuxième mémoire (4).

2. Générateur de signaux de base et de signaux de test de télévision, selon la revendication 1, caractérisé en ce que le premier compteur (3) est un compteur de 0 à t-1 suivant la fréquence $\frac{1}{nT_0}$ (n entier positif), et en ce que le deuxième compteur (2) est un compteur de 0 à q−1 suivant la fréquence $\frac{1}{T_0}$, la durée de comptage de 0 à q−1 du deuxième compteur (2) et la durée de comptage de 0 à t−1 du premier compteur (3) étant respectivement égales à la durée d'une ligne de télévision et à la durée d'une trame de télévision.

3. Générateur de signaux de base et de signaux de test de télévision selon la revendication 1, caractérisé en ce qu'il comporte: un circuit d'horloge (1) pour commander le premier et le deuxième compteur et un dispositif d'asservissement (5) pour asservir le circuit d'horloge (1) et le premier compteur (3) ayant une entrée destinée à recevoir un signal extérieur (SYN).

4. Système de télévision, caractérisé en ce qu'il comporte un générateur selon l'une des revendications 1 à 3.

## Patentansprüche

1. Basissignal- und Fernsehtestsignal-Generator, der einen ersten Speicher (6) zum Speichern der Werte, welche die Basissignale und die Testsignale während Zeitintervallen der Dauer $T_0$ annehmen können, und Adressiermittel enthält, um dem ersten Speicher (6) Adreßwerte mit einer Frequenz $\frac{1}{T_0}$ zuzuführen, dadurch gekennzeichnet, daß der erste Speicher (6) gebildet ist aus p Speicherzonen, die jeweils q Speicherfelder enthalten (p und q ganzzahlig und positiv), wovon jedes Feld eine Bitgruppe speichert, die für ein Zeitquantum $T_0$ vollständig die Amplitude der Basissignale und der Testsignale definiert; und daß die Adressiermittel enthalten: einen zweiten Speicher (4) mit t Speicherfeldern (t ganzzahlig und positiv), wovon jedes Feld eine Binärzahl speichert, die einer Speicherzone des ersten Speichers (6) zugeordnet ist; einen ersten Zähler (3) zum aufeinanderfolgenden Auslesen der t Speicherfelder des zweiten Speichers (4) und einen zweiten Zähler (2) zum Auslesen der Speicherfelder der Speicherzone, welche der von dem zweiten Speicher (4) ausgegebenen Binärzahl zugeordnet ist, mit der Frequenz $\frac{1}{T_0}$.

2. Basissignal- und Fernsehtestsignal-Generator nach Anspruch 1, dadurch gekennzeichnet, daß der erste Zähler (3) ein Zähler von 0 bis $t-1$ mit der Frequenz $\frac{1}{nT_0}$ (n ganzzahlig und positiv) ist und daß der zweite Zähler (2) ein Zähler von 0 bis $q-1$ mit der Frequenz $\frac{1}{T_0}$ ist, wobei die Zähldauer von 0 bis $q-1$ des zweiten Zählers (2) gleich der Dauer einer Fernsehzeile und die Zähldauer des ersten Zählers (3) von 0 bis $t-1$ gleich der Dauer eines Fernsehteilbildes ist.

3. Basissignal- und Fernsehtestsignal-Generator nach Anspruch 1, dadurch gekennzeichnet, daß er enthält: eine Taktschaltung (1) zum Steuern des ersten und des zweiten Zählers und eine Regelvorrichtung (5) zur Regelung der Taktschaltung (1) und des ersten Zählers (3), der einen Eingang zum Empfangen eines äußeren Signals (SYN) aufweist.

4. Fernsehsystem, dadurch gekennzeichnet, daß es einen Generator nach einem der Ansprüche 1 bis 3 enthält.

## Claims

1. Base signal and television test signal generator comprising a first memory (6) storing the values that the base signals and the test signals can assume during time intervals of the duration $T_0$, and comprising addressing means for supplying address values to the first memory (6) at a frequency $\frac{1}{T_0}$, characterized in that the first mermory (6) is formed of p memory zones each having q memory fields (p and q positive integers), each field storing a set of bits totally defining the amplitude of the base signals and of the test signals for a time quantum $T_0$; and in that the addressing means comprise: a second memory (4) having t memory fields (t positive integer), each field storing a binary number associated with a memory zone of the first memory (6); a first counter (3) for successively reading the t memory fields of the second memory (4) and a second counter (2) for reading, at the frequency $\frac{1}{T_0}$, the memory fields of the memory zone associated with the binary number supplied by the second memory (4).

2. Base signal and television test signal generator according to claim 1, characterized in that the first counter (3) is a counter from 0 to $t-1$ at the frequency $\frac{1}{nT_0}$ (n positive integer), and in that the second counter (2) is a counter from 0 to $q-1$ at the frequency $\frac{1}{T_0}$, the counting duration from 0 to $q-1$ of the second counter (2) and the counting duration from 0 to $t-1$ of the first counter (3) being equal to the duration of a television line and to the duration of a television frame, respectively.

3. Base signal and television test signal generator according to claim 1, characterized in that it comprises: a clock circuit (1) for controlling the first and the secon counters and a slaving device (5) for controlling the clock circuit (1) and the first counter (3) having an input for receiving an external signal (SYN).

4. Television system, characterized in that it comprises a generator according to any of claims 1 to 3.